# FASCICULE DE BREVET EUROPEEN

(11) **EP 1 209 489 B1**
(45) Date de publication et mention de la délivrance du brevet: **26.04.2006**
(21) Numéro de dépôt: 01402893.0
(22) Date de dépôt: 09.11.2001
(51) Int. Cl.: G01V 15/00

(54) **Ensemble comportant une enceinte de travail, un organe de réception de produits, et un système de communication d'informations par ondes radiofréquences**
Anordnung mit einem Arbeitsplatz, einer Empfangseinrichtung für die Produkte und einem Informationsvermittlungssystem unter Verwendung von Radiofrequenzwellen
Arrangement having a workspace, an apparatus for receiving samples and an RF information communication system

(30) Priorité: 27.11.2000 FR 0015289
(43) Date de publication de la demande: 29.05.2002
(73) Titulaire: Jouan, 44800 Saint Herblain (FR)
(72) Inventeur: Benezech, Philippe, 44300 Nantes (FR); Mahe, Gilles, 44300 Nantes (FR)
(74) Mandataire: Domenego, Bertrand

(56) Documents cités:
- EP-A- 0 712 102
- WO-A-00/33005
- WO-A-96/41296
- US-A- 5 963 134
- US-A- 6 148 291

## Description

La présente invention a pour objet un ensemble selon le préambule de la revendication 1.

L'invention s'applique en particulier au traitement de matières ou d'échantillons biologiques et notamment à la culture, à la conservation et/ou à l'analyse de cellules et/ou de microorganismes.

Un ensemble du type précité est connu du document WO-00/33 005. Les organes de réception y sont des récipients destinés à contenir des prélèvements ou produits biologiques. Chaque récipient est équipé d'un transpondeur radiofréquences d'identification du produit qu'il contient. L'enceinte comprend dans son espace de travail une série de plateaux ou étagères dont chacun porte une antenne de détection reliée à un récepteur radiofréquences pour interroger les transpondeurs afin de contrôler le contenu de l'enceinte.

Ce document n'indique pas comment la distinction entre des mouvements entrant et sortant de récipients pourrait être opérée.

Un but de l'invention est de fournir un ensemble du type précité qui permette de distinguer facilement un mouvement d'introduction d'un mouvement de sortie de l'enceinte d'un organe de réception de produits.

A cet effet, l'invention a pour objet un ensemble selon la revendication 1.

Selon des modes particuliers de réalisation l'ensemble peut comprendre une ou plusieurs des caractéristiques des revendications 2 à 6.

L'invention a en outre pour objet une enceinte selon la revendication 7 tel que défini ci-dessus, caractérisée en ce qu'elle comprend au moins deux moyens d'émission et/ou de réception d'ondes radiofréquences espacés le long du sens d'introduction d'un organe de réception d'au moins un produit dans l'enceinte pour émettre et/ou recevoir des informations vers et/ou depuis un moyen d'émission et/ou de réception d'ondes radiofréquences porté par l'organe, suivant un ordre représentatif de l'introduction ou de l'extraction de l'organe de l'enceinte.

Les revendications 8 et 9 concernent des modes particuliers de réalisation.

L'invention concerne également un organe de réception selon la revendication 10.

Les revendications 11 et 12 concernent des modes particuliers de réalisation.

L'invention sera mieux comprise à la lecture de la description qui va suivre, donnée uniquement à titre d'exemple, et faite en se référant aux dessins annexés, sur lesquels :
- les figures 1 et 2 sont deux vues schématiques, partielles et latérales illustrant deux étapes successives de l'introduction d'un plateau de support de récipients de produits dans l'enceinte d'un ensemble selon un premier mode de réalisation de l'invention,
- les figures 3 et 4 sont des vues analogues aux figures 1 et 2 et illustrant un ensemble selon un deuxième mode de réalisation de l'invention,
- la figure 5 est une vue analogue à la figure 3 illustrant une variante de l'ensemble de la figure 3,
- la figure 6 est une vue schématique de dessus et agrandie du bac de réception de récipients de produits de l'ensemble de la figure 5, et
- la figure 7 est une vue schématique analogue à 1a figure 5, illustrant une variante de l'enceinte de l'ensemble de la figure 5.

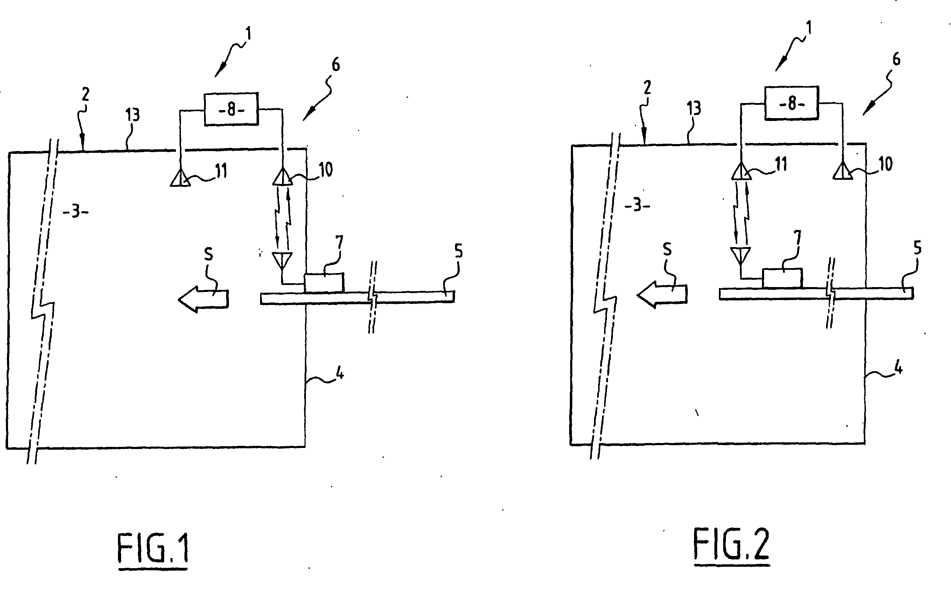

On reconnaît sur la figure 1 un ensemble 1 comprenant:
- une enceinte 2 thermostatée, par exemple réfrigérée, délimitant un espace confiné de travail 3 propre à la mise en oeuvre d'un travail sur des produits, et dont une ouverture d'accès 4 peut être obturée par une porte mobile non représentée,
- un plateau 5 de support de récipients de produits biologiques non représentés, par exemple des boîtes de Petri, ce plateau étant destiné à former une étagère de l'enceinte 2, et
- un système 6 de communication par ondes radiofréquences et de contrôle du contenu de l'enceinte 2, comprenant un transpondeur d'identification 7 porté par le plateau 5, une unité de communication et de traitement d'informations 8 associée à l'enceinte 2, et, pour chaque récipient, un transpondeur radiofréquences d'identification porté par le récipient.

On rappelle que les ondes radiofréquences sont des ondes électromagnétiques. Dans les exemples décrits ci-dessous, les fréquences des ondes utilisées peuvent être de 125 kHz, 13,56 MHz et 2,45 GHz. D'autres fréquences peuvent bien sûr être envisagées.

Un identifiant ou information d'identification du plateau 5 est stockée dans le transpondeur 7.

De même, pour chaque récipient, un identifiant du produit qu'il contient est stocké dans le transpondeur porté par le récipient.

L'unité 8 comprend de manière classique un calculateur, des moyens de stockage de données sous forme de toute mémoire appropriée, une horloge, et un module d'émission et de réception d'ondes radiofréquences. Cette unité 8 est reliée électriquement à deux antennes 10 et 11 qui sont espacées l'une de l'autre par rapport au sens d'introduction S du plateau 5 dans l'enceinte 2.

Plus précisément, ces antennes 10 et 11 sont disposées dans l'espace de travail 3 et sont portées par la paroi supérieure 13 de l'enceinte 2. En outre, elles sont suffisamment directives et sont disposées pour que leurs zones d'émission et de réception soient orientées vers le bas et ne se recouvrent pas, ou soient au moins distinctes.

Les antennes 10 et 11 sont situées au voisinage de l'entrée 4 de l'espace de travail 3 de l'enceinte 2 de sorte que le plateau 5 traverse entièrement les zones d'émission et de réception des antennes 10 et 11 lorsqu'il est introduit ou extrait de l'enceinte.

Lorsqu'on introduit le plateau 5 dans l'enceinte 2 pour le monter à l'emplacement qui lui est assigné parmi plusieurs emplacements possibles. le transpondeur 7 et les transpondeurs des récipients qu'il porte pénètrent tout d'abord dans la zone d'émission et de réception de l'antenne 10. L'unité 8 interroge alors via l'antenne 10 ces transpondeurs qui lui transmettent en réponse l'identifiant du plateau 5 et ceux des produits contenus dans les récipients portés par le plateau 5.

Lorsque le mouvement d'introduction du plateau 5 se poursuit, les transpondeurs sortent du champ d'émission et de réception de l'antenne 10 puis pénètrent dans celui de l'antenne 11. L'unité 8 interroge alors ces transpondeurs via l'antenne 11 qui transmettent à nouveau à l'unité 8, via l'antenne 11, l'identifiant du plateau 5 et les identifiants des produits contenus dans les récipients qu'il porte.

L'unité 8 reçoit alors deux fois ces identifiants, une première fois via l'antenne 10 puis une seconde fois via l'antenne 11. Lorsqu'on extrait le plateau 5 de l'enceinte 2, l'unité 8 reçoit à l'inverse ces l'identifiants une première fois via l'antenne 11, et une seconde fois via l'antenne 10.

On conçoit donc que la séquence de réception des identifiants via les antennes 10 et 11 est représentative de l'introduction ou de l'extraction du plateau 5 de l'enceinte 2.

Ainsi, le système 6 permet de distinguer l'introduction et l'extraction du plateau 5, et des produits contenus dans les récipients qu'il porte, et ce grâce à une structure relativement simple.

L'unité 8 est adaptée pour déduire des informations qu'elle a ainsi reçues quels produits sont introduits ou extraits de l'enceinte, à partir de leurs identifiants et de leur ordre de réception par les antennes 10 et 11, et sur quel plateau 5 parmi d'autres plateaux ils se trouvent dans l'enceinte 2 ou sur quel plateau 5 ils se trouvaient, à partir de l'identifiant du plateau 5. L'unité 8 permet donc notamment de localiser les produits contenus dans l'enceinte 2.

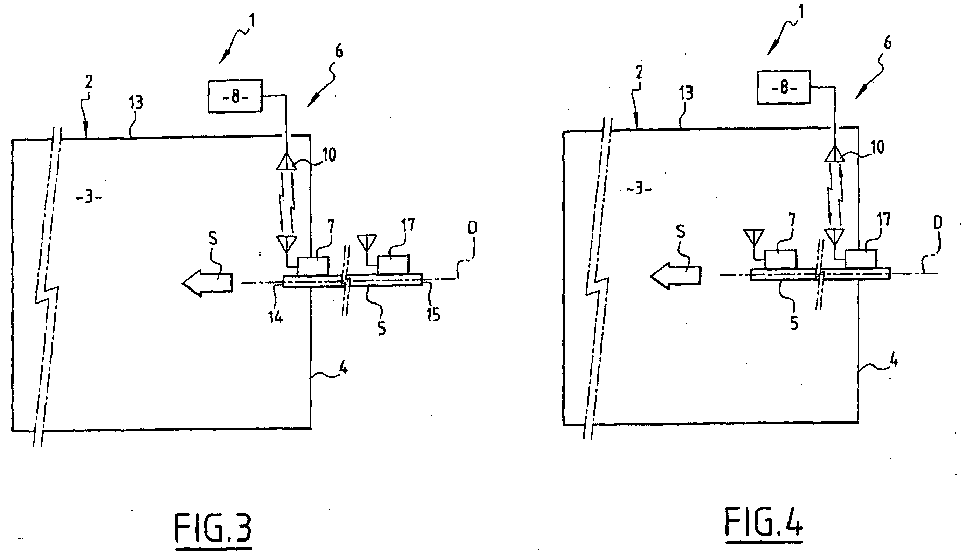

Le mode de réalisation des figures 3 et 4 se distingue de celui des figures 1 et 2 par le fait que le système 6 comprend deux transpondeurs d'identification 7 et 17 portés par le plateau 5 et que l'unité 8 n'est reliée qu'à une antenne 10.

Les transpondeurs 7 et 17 sont espacés l'un de l'autre suivant une direction D destinée à être confondue avec le sens d'introduction S du plateau 5 dans l'enceinte 2.

Plus particulièrement, le transpondeur 7 est placé à l'extrémité avant 14 du plateau 5 et le.transpondeur 17 est placé à l'extrémité arrière 15 du plateau 5. Le plateau 5 possède par exemple une structure orientée pour ne permettre son introduction selon le sens S et son montage dans l'enceinte 2 que lorsque l'extrémité 14 est situé en avant de l'extrémité 15 par rapport au sens S.

Un identifiant ou information d'identification de l'extrémité avant du plateau 5 est stocké dans une mémoire du transpondeur 7. Un identifiant de l'extrémité arrière du plateau 5, distinct de l'identifiant de l'extrémité avant, est stocké dans une mémoire du transpondeur 17.

Lorsqu'on introduit le plateau 5 dans l'espace de travail 3, après avoir libéré l'ouverture d'accès 4, le transpondeur 7 pénètre en premier dans le champ d'émission et de réception de l'antenne 10. L'unité 8 interroge alors le transpondeur 7 qui lui fournit l'identifiant de l'extrémité avant du plateau 5, puis le transpondeur 7 sort du champ d'émission et de réception de l'antenne 10.

Au fur et à mesure que les récipients portés par le plateau 5 pénètrent dans ce champ d'émission et de réception, leurs transpondeurs interrogés fournissent les identifiants des produits qu'ils contiennent à l'unité 8.

Ensuite, le transpondeur 17 pénètre dans le champ d'émission et de réception de l'antenne 10. L'unité 8 l'interroge alors et il lui fournit l'identifiant de l'extrémité arrière du plateau 5.

Ainsi, l'unité 8 qui reçoit successivement l'identifiant de l'extrémité avant puis l'identifiant de l'extrémité arrière est capable de déduire de l'ordre de réception de ces informations que le plateau 5 a été introduit dans l'enceinte 2. De plus, l'unité 8 peut déduire des informations reçues quels produits sont situés sur le plateau 5 parmi d'autres plateaux situés dans l'enceinte 2.

A l'inverse, lorsque le plateau 5 est extrait de l'enceinte 2, l'unité 8 reçoit l'identifiant de l'extrémité arrière, émis par le transpondeur arrière 17, puis l'identifiant de l'extrémité avant émis par le transpondeur avant 7.

Ainsi, le système 6 permet là encore de distinguer, avec une structure relativement simple, un mouvement entrant d'un mouvement sortant du plateau 5, et des produits contenus dans les récipients qu'il porte.

On conçoit que les principes ci-dessus peuvent être appliqués à des récipients de produits ou à des supports destinés à supporter directement des produits. Ces récipients ou ces supports sont alors équipés de transpondeurs avant et arrière.

Selon un autre mode de réalisation non représenté, l'enceinte 2 peut comprendre, à la place de l'unité 8 et des deux antennes 10 et 11 des figures 1 et 2, deux transpondeurs radiofréquences d'émission d'identifiants distincts. Dans ce cas, le plateau 5 comprend des moyens de réception des identifiants émis par ces transpondeurs et éventuellement une unité de traitement d'informations embarquée qui détermine si le plateau 5 est introduit ou extrait de l'enceinte 2.

Selon une variante de ce mode de réalisation, le plateau 5 comprend un moyen de réception des identifiants émis par les transpondeurs de l'enceinte 2, et un moyen de renvoi, par exemple par ondes radiofréquences, de ces identifiants vers une unité fixe de traitement d'informations située hors de l'enceinte, et par exemple commune à un ensemble d'enceintes 2 ou de postes de travail.

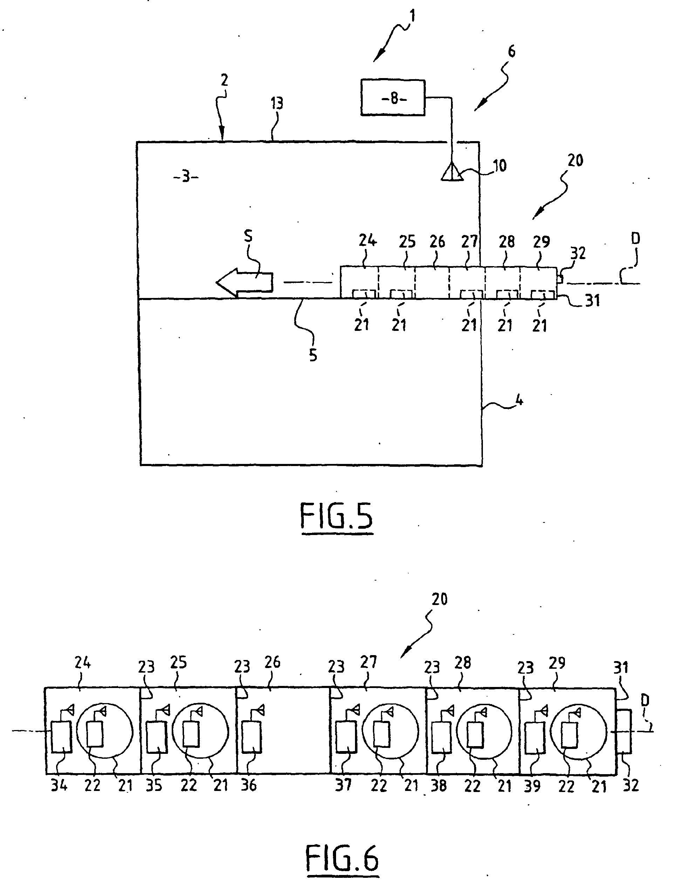

Les figures 5 et 6 illustrent un bac 20 de réception de récipients 21 de produits, par exemple des boîtes de Pétri, qui contiennent par exemple des prélèvements biologiques et qui sont munis de transpondeurs radiofréquences 22 d'identification des produits qu'ils contiennent. Un tel bac 20, qui est ouvert à son extrémité supérieure, est destiné à être disposé dans une enceinte 2 telle que celle décrite aux figures 3 et 4, munie également d'une unité 8 et d'une antenne 10, et d'étagères 5 disposées dans l'enceinte 2 et dont une seule est représentée sur la figure 5. Contrairement au mode de réalisation des figures 3 et 4, les étagères 5 sont fixes et ne sont pas munies de transpondeurs. Dans une variante non représentée, l'extrémité supérieure du bac peut être fermée par un couvercle transparent aux ondes radiofréquences utilisées.

Le bac 20 a une forme allongée suivant la direction D destinée à être confondue avec son sens d'introduction dans l'enceinte 2. Il possède une structure compartimentée dans le sens de sa longueur. Ainsi, le bac 20 comprend une série de cloisons 23 qui délimitent des logements 24 à 29 de réception de récipients 21.

Le bac 20 est destiné à être placé sur une étagère 5 de l'enceinte 2 en l'introduisant suivant sa direction longitudinale D. Ainsi, plusieurs bacs 20 identiques peuvent être placés les uns à côté des autres sur chaque étagère 5 de l'enceinte 2. Pour faciliter la manipulation du bac 20, il comprend par exemple sur sa paroi arrière 31 une poignée 32 de saisie.

Pour chaque logement 24 à 29, le bac 20 comprend un transpondeur radiofréquences d'identification, respectivement 34 à 39, dans lequel un identifiant du logement considéré est stocké en mémoire.

Ainsi, les identifiants des logements 24 à 29 sont distincts.

Lorsqu'on introduit le bac 20 dans la position qui lui est assignée dans l'enceinte 2, l'unité 8 reçoit, via l'antenne 10, et en réponse à ses interrogations, successivement :
- l'identifiant du logement avant 24 et celui du produit contenu dans le récipient 21 qui y est logé,
- l'identifiant du logement 25 et celui du produit contenu dans le récipient 21 qui y est logé,
- l'identifiant du logement 26, mais aucun identifiant de produit puisque ce compartiment ne contient pas de récipient,
- l'identifiant du logement 27 et celui du produit contenu dans le récipient 21 qui y est logé,
- l'identifiant du logement 28 et celui du produit contenu dans le récipient 21 qui y est logé, et
- l'identifiant du logement 29 et celui du produit contenu dans le récipient 21 qui y est logé.

L'unité 8 peut déduire de l'ordre de réception des identifiants des logements 24 à 29 si le bac 20 a été introduit ou extrait de l'enceinte 3.

Par ailleurs, la présence d'un transpondeur émettant un identifiant distinct pour chaque logement permet de localiser précisément chaque produit introduit dans l'enceinte 2, le bac 20 et le logement de ce bac où il est situé, et par ailleurs de déterminer si un logement de bac est vide.

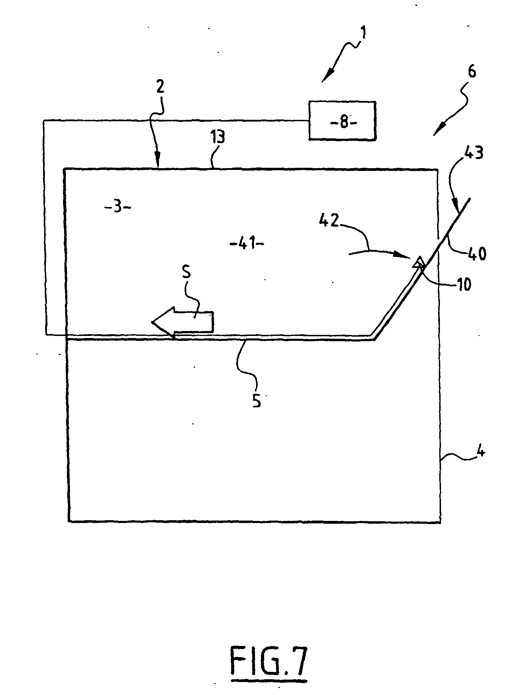

Dans une variante illustrée par la figure 7, une porte 40 est articulée à une extrémité de chaque étagère 5 pour autoriser et interdire l'accès au compartiment 41 délimité dans l'espace de travail 3 par l'étagère 5 considéré.

Cette porte 40 est mobile par rotation, selon le sens schématisé par la flèche 42 sur la figure 7, entre une position sensiblement verticale de fermeture et une position sensiblement horizontale d'ouverture, où la porte 40 prolonge l'étagère 5.

Chaque porte 40 est alors munie d'une antenne 10 sur sa surface 43 destinée à être orientée vers le haut lorsqu'elle est en position d'ouverture. Cette antenne 10 est en pratique d'une épaisseur très faible et elle est recouverte d'une pellicule de protection.

Lorsqu'on ouvre la porte 40 pour introduire ou extraire un bac 20 du compartiment 41, l'antenne 10 correspondante est alors placée automatiquement en position adéquate pour pouvoir interroger les identifiants des logements du bac 20 et des échantillons qui y sont reçus.

Les principes décrits en regard des figures 5 à 7 peuvent s'appliquer à tout organe de réception de produits présentant plusieurs emplacements de réception de produits espacés le long d'une direction D de l'organe destinée à être parallèle au sens d'introduction de l'organe dans l'enceinte.

Dans ce cas, les transpondeurs associés à chaque emplacement doivent également être espacés l'un de l'autre le long de cette direction D.

## Revendications

1. Ensemble (1) du type comprenant :
- un premier élément constitué par une enceinte de travail (2) délimitant intérieurement un espace de travail (3) et dans laquelle une ouverture (4) d'accès à l'espace de travail est ménagée,
- au moins un organe (5 ; 20) de réception d'au moins un produit, l'organe étant destiné à être introduit par l'ouverture d'accès (4) dans l'espace de travail (3) suivant un sens d'introduction (S), l'organe constituant un second élément,
- un système de communication d'informations par ondes radiofréquences (6) comprenant au moins un moyen (10, 11 ; 10) d'émission et/ou de réception d'ondes radiofréquences associé au premier élément et au moins un moyen (7 ; 7, 17 ;34 à 39) d'émission et/ou de réception d'ondes radiofréquences-porté par le second élément (5 ; 20) pour communiquer des informations avec le moyen d'émission et/ou de réception associé au premier élément afin de déterminer si l'organe de réception (5 ; 20) est introduit dans l'enceinte ou en est extrait, **caractérisé en ce que** le système de communication (6) comprend au moins deux moyens (10, 11 ; 7, 17 ; 34 à 39) d'émission et/ou de réception d'ondes radiofréquences, associés à l'un des éléments et espacés le long d'une direction (D) destinée à être confondue avec le sens d'introduction (S), pour émettre et/ou recevoir des informations vers et/ou depuis au moins un moyen (7 ; 10) d'émission et/ou de réception d'ondes radiofréquences associé à l'autre des éléments, suivant un ordre représentatif de l'introduction ou de l'extraction de l'organe de l'enceinte.

2. Ensemble selon la revendication 1, **caractérisé en ce que** lesdits deux moyens sont des moyens (7, 17 ; 34 à 39) d'émission de deux signaux distincts.

3. Ensemble selon la revendication 2, **caractérisé en ce que** lesdits deux moyens sont portés par l'organe de réception (5 ; 20).

4. Ensemble selon la revendication 1, **caractérisé en ce que** lesdits deux moyens sont des moyens (10, 11) de réception d'un signal émis par ledit moyen (7 ; 34 à 39) associé à l'autre des éléments.

5. Ensemble selon la revendication 4, **caractérisé en ce que** lesdits deux moyens sont associés à l'enceinte (2).

6. Ensemble selon l'une des revendications précédentes, **caractérisé en ce qu'**il comprend plusieurs récipients (21) de produits munis chacun d'un moyen (22) d'émission par ondes radiofréquences d'un signal d'identification du produit contenu dans le récipient, **en ce que** l'organe de réception est un support (20) de récipients comprenant plusieurs emplacements (24 à 29) de positionnement de récipients espacés suivant ladite direction (D), et **en ce que** le système de communication comprend au voisinage de chaque emplacement au moins un moyen (34 à 39) d'émission par ondes radiofréquences d'un signal d'identification de l'emplacement considéré, lesquels moyens (34 à 39) d'émission sont espacés suivant ladite direction (D).

7. Enceinte pour un ensemble selon l'une des revendications précédentes, **caractérisée en ce qu'**elle comprend au moins deux moyens (10, 11) d'émission et/ou de réception d'ondes radiofréquences espacés le long du sens d'introduction (S) d'un organe de réception d'au moins un produit dans l'enceinte (2) pour émettre et/ou recevoir des informations vers et/ou depuis un moyen d'émission et/ou de réception d'ondes radiofréquences porté par l'organe(5 ;20), suivant un ordre représentatif de l'introduction - ou de l'extraction de l'organe (5 ; 20) de l'enceinte.

8. Enceinte selon la revendication 7, **caractérisée en ce que** lesdits deux moyens sont des moyens d'émission de deux signaux distincts.

9. Enceinte selon la revendication 8, **caractérisée en ce que** lesdits deux moyens sont des moyens (10, 11) de réception d'un signal émis par un moyen (7 ; 17 ; 34 à 39) d'émission associé à l'organe de réception (5 ; 20).

10. Organe de réception (5 ; 20) d'au moins un produit pour un ensemble selon l'une des revendications 1 à 6, **caractérisé en ce qu'**il comprend au moins deux moyens (7, 17 ; 34 à 39) d'émission et/ou de réception d'ondes radiofréquences espacés le long d'une direction (D) destinée à être confondue avec le sens d'introduction (S) dans une enceinte pour émettre et/ou recevoir des informations vers et/ou depuis un moyen (10) d'émission et/ou de réception d'ondes radiofréquences associé à l'enceinte, suivant un ordre représentatif de l'introduction ou de l'extraction de l'organe de l'enceinte.

11. Organe selon la revendication 10, **caractérisé en ce que** lesdits deux moyens sont des moyens (7, 17 ; 34 à 39) d'émission de deux signaux distincts.

12. Organe selon la revendication 10, **caractérisé en ce que** lesdits deux moyens sont des moyens de réception d'un signal émis par un moyen d'émission associé à l'enceinte.

13. Organe selon l'une des revendications 10 à 12, **caractérisé en ce que** l'organe est un support (20) de récipients (21) de produits munis chacun d'un moyen (22) d'émission par ondes radiofréquences d'un signal d'identification du produit, **en ce que** l'organe comprend plusieurs emplacements (24 à 29) de positionnement de récipients espacés suivant ladite direction (D), et **en ce que** l'organe comprend, au voisinage de chaque emplacement, au moins un moyen (34 à 39) d'émission par ondes radiofréquences d'un signal d'identification de l'emplacement considéré, lesquels moyens (34 à 39) d'émission sont espacés le long de ladite direction (D).

## Claims

1. Assembly (1) of a type which includes:
- a first element made up of a working enclosure (2) which internally demarcates a work space (3) and in which an access opening (4) to the work space is made,
- at least one device (5; 20) for receiving at least one product, with the device being designed to be introduced through the access opening (4) into the work space (3) along a direction of introduction (S), with the device constituting a second element,
- a system for the communication of information using radio-frequency waves (6) including at least one means (10, 11; 10) of transmitting and/or receiving radio-frequency waves that is associated with the first element and at least one means (7; 7, 17; 34 to 39) of transmitting and/or receiving radio-frequency waves carried by the second element (5; 20) in order to communicate information to the means of transmitting and/or receiving associated with the first element so as to determine whether the receiving device (5; 20) has been introduced into the enclosure or is withdrawn from it, **characterised by** the fact that the communication system (6) is made up of at least two means (10, 11; 7, 17; 34 to 39) for transmitting and/or receiving radio-frequency waves, associated with one of the elements and spaced out along one direction (D) designed to be the same as the direction of introduction (S), to transmit and/or receive information to and/or from at least one means (7; 10) of transmitting and/or receiving radio-frequency waves associated with the other of the elements, in an order which represents the introduction or withdrawal of the device from the enclosure.

2. Assembly as described in claim 1, **characterised by** the fact that the two said means are means (7, 17; 34 to 39) of transmitting two distinct signals.

3. Assembly as described in claim 2, **characterised by** the fact that the two said means are carried on the receiving device (5; 20).

4. Assembly as described in claim 1, **characterised by** the fact that the two said means are means (10, 11) of receiving a signal transmitted by the said means (7; 34 to 39) associated with the other of the elements.

5. Assembly as described in claim 4, **characterised by** the fact that the two said means are associated with the enclosure (2).

6. Assembly as described in any of the preceding claims, **characterised by** the fact that it includes several product containers (21) each equipped with a means (22) of transmission, using radio-frequency waves, of an identification signal for the product contained in the container, by the fact that the receiving device is a support for containers (20) which includes several emplacements (24 to 29) for locating containers spaced out along the said direction (D), and by the fact that the communication system includes, close to each emplacement, at least one means (34 to 39) of transmitting by radio-frequency waves an identification signal for the emplacement concerned, where the means (34 to 39) of transmission are spaced out along the said direction (D).

7. Enclosure for an assembly as described in any of the preceding claims, **characterised by** the fact that it includes at least two means (10, 11) for transmitting and/or receiving radio-frequency waves spaced out along the direction of introduction (S) of a device for receiving at least one product into the enclosure (2) so as to transmit and/or receive information to and/or from a means of transmission and/or of reception of radio-frequency waves carried by the device (5; 20), in an order which represents the introduction or withdrawal of the device (5; 20) from the enclosure.

8. Enclosure as described in claim 7, **characterised by** the fact that the said two means are means of transmitting two distinct signals.

9. Enclosure as described in claim 8, **characterised by** the fact that the said two means are means (10, 11) of receiving a signal transmitted a means (7, 17; 34 to 39) of transmission associated with the receiving device (5; 20).

10. Receiving device (5; 20) for at least one product for an assembly as described in any of claims 1 to 6, **characterised by** the fact that it includes at least two means (7, 17; 34 to 39) for transmitting and/or receiving radio-frequency waves spaced along a direction (D) designed to be the same as the direction of introduction (S) into an enclosure, for transmitting and/or receiving information to and/or from a means (10) of transmitting and/or receiving radio-frequency waves associated with the enclosure in an order which represents the introduction or withdrawal of the device from the enclosure.

11. Device as described in claim 10, **characterised by** the fact that the two said means are means (7, 17; 34 to 39) of transmitting two distinct signals.

12. Device as described in claim 10, **characterised by** the fact that the two said means are means of receiving a signal transmitted by a means of transmission associated with the enclosure.

13. Device as described in any of claims 10 to 12, **characterised by** the fact that the device is a support (20) for product containers (21), each fitted with a means (22) of transmitting an identification signal for the product by radio-frequency waves, by the fact that device includes several emplacements (24 to 29) for location of containers spaced out along the said direction (D), and by the fact that this device includes, close to each location, at least one means (34 to 39) of transmitting by radio frequency waves an identification signal for the emplacement involved, with the said means (34 to 39) of transmission being spaced out along the said direction (D).

## Patentansprüche

1. Anordnung (1) der Art, umfassend:
- ein erstes Teil, bestehend aus einem Arbeitsgehause (2), das einen Arbeitsraum (3) in seinem Inneren umschließt, und in dem eine Zugangsöffnung (4) zum Arbeitsraum ausgebildet ist,
- mindestens ein Organ (5; 20) zum Aufnehmen mindestens eines Stoffes, wobei das Organ dazu bestimmt ist, durch die Zugangsöffnung (4) in einer ersten Einbringrichtung (S) in den Arbeitsraum (3) eingebracht zu werden, wobei das Organ ein zweites Teil darstellt,
- ein Informationsübertragungssystem per Funk (6), bestehend aus mindestens einem Mittel (10, 11; 10) zur Aussendung und/oder zum Empfang von Funkwellen, das dem ersten Teil zugeordnet ist, und mindestens einem Mittel (7; 7, 17; 34 bis 39) zur Aussendung und/oder zum Empfang von Funkwellen, das vom zweiten Teil (5; 20) getragen wird, um mit dem dem ersten Teil zugeordneten Mittel zur Aussendung und/oder zum Empfang Informationen auszutauschen, um zu bestimmen, ob das Aufnahmeorgan (5; 20) ins Gehäuse eingebracht oder daraus entnommen wird, **dadurch gekennzeichnet, dass** das Übertragungssystem (6) mindestens zwei Mittel (10, 11 ; 7, 17; 34 bis 39) zur Aussendung und/oder zum Empfang von Funkwellen umfasst, die einem der Teile zugeordnet sind und längs einer Richtung (D) beabstandet sind, die dazu bestimmt ist, mit der Einbringrichtung (S) zusammenzufallen, um Informationen zum oder vom mindestens einen Mittel (7; 10) zur Aussendung undioder zum Empfang von Funkwellen, das dem anderen der Teile zugeordnet ist, in einer Reihenfolge auszusenden und/oder zu empfangen, die dem Einbringen des Organs ins oder dem Entnehmen aus dem Gehäuse entspricht.

2. Anordnung nach Patentanspruch 1, **dadurch gekennzeichnet, dass** die genannten beiden Mittel Mittel (7, 17; 34 bis 39) zur Aussendung zweier verschiedener Signale sind.

3. Anordnung nach Patentanspruch 2, **dadurch gekennzeichnet, dass** die genannten beiden Mittel vom Aufnahmeorgan (5; 20) getragen werden.

4. Anordnung nach Patentanspruch 1, **dadurch gekennzeichnet, dass** die genannten beiden Mittel Mittel (10, 11) zum Empfang eines Signals sind, das vom genannten dem anderen der Teile zugeordneten Mittel (7; 34 bis 39) gesendet wird.

5. Anordnung nach Patentanspruch 4, **dadurch gekennzeichnet, dass** die genannten beiden Mittel dem Gehäuse (2) zugeordnet sind.

6. Anordnung nach einem der vorangehenden Patentansprüche, **dadurch gekennzeichnet, dass** sie mehrere Behälter (21) für Stoffe umfasst, die jeweils mit einem Mittel (22) zur Aussendung eines Signals zur Identifikation des im Behälter enthaltenen Stoffes per Funk versehen sind, **dadurch**, dass das Aufnahmeorgan ein Träger (20) von Behältern ist, der mehrere Stellen (24 bis 29) zum Anordnen von Behältern in der genannten Richtung (D) mit Abstand voneinander aufweist und **dadurch**, dass das Übertragungssystem nahe jeder Stelle mindestens ein Mittel (34 bis 39) zur Aussendung eines Signals zur Identifikation dieser Stelle per Funk umfasst, wobei diese Sendemittel (34 bis 39) in der genannten Richtung (D) mit Abstand voneinander angeordnet sind.

7. Gehäuse für eine Anordnung nach einem der vorangehenden Patentansprüche, **dadurch gekennzeichnet, dass** es mindestens zwei Mittel (10, 11) zur Aussendung und/oder zum Empfang von Funkwellen umfasst, die entsprechend der Richtung (S) der Einbringung eines Aufnahmeorgans mindestens eines Stoffes ins Gehäuse (2) mit Abstand voneinander angeordnet sind, um Informationen in einer Reihenfolge, die dem Einbringen des Organs (5; 20) ins oder dem Entnehmen aus dem Gehäuse entspricht, zu einem Sende- und/oder Empfangsmittel von Funkwellen zu senden und/oder von ihm zu empfangen, das vom Organ (5; 20) getragen wird.

8. Gehäuse nach Patentanspruch 7, **dadurch gekennzeichnet, dass** die genannten beiden Mittel Mittel zur Aussendung zweier verschiedener Signale sind.

9. Gehäuse nach Patentanspruch 8, **dadurch gekennzeichnet, dass** die genannten beiden Mittel Mittel (10, 11) zum Empfang eines Signals sind, das vom genannten dem Aufnahmeorgan (5; 20) zugeordneten Sendemittel (7; 17; 34 bis 39) gesendet wird.

10. Aufnahmeorgan (5; 20) mindestens eines Stoffes für eine Anordnung nach einem der Patentansprüche 1 bis 6, **dadurch gekennzeichnet, dass** es mindestens zwei Mittel (7, 17; 34 bis 39) zur Aussendung und/oder zum Empfang von Funkwellen umfasst, die längs einer Richtung (D) beabstandet sind, die dazu bestimmt ist, mit der Einbringrichtung (S) in ein Gehäuse zusammenzufallen, um Informationen zum oder von einem Mittel (10) zur Aussendung und/oder zum Empfang von Funkwellen, das dem Gehäuse zugeordnet ist, in einer Reihenfolge auszusenden und/oder zu empfangen, die dem Einbringen des Organs ins oder dem Entnehmen aus dem Gehäuse entspricht.

11. Organ nach Patentanspruch 10, **dadurch gekennzeichnet, dass** die genannten beiden Mittel Mittel (7; 17; 34 bis 39) zur Aussendung zweier verschiedener Signale sind.

12. Organ nach Patentanspruch 10, **dadurch gekennzeichnet, dass** die genannten beiden Mittel Mittel zum Empfang eines Signals sind, das von einem dem Gehäuse zugeordneten Sendemittel gesendet wird.

13. Organ nach einem der Patentansprüche 10 bis 12, **dadurch gekennzeichnet, dass** das Organ ein Träger (20) von Behältern (21) für Stoffe ist, die jeweils mit einem Mittel (22) zur Aussendung eines Signals zur Identifikation des Stoffes per Funk versehen sind, **dadurch**, dass das Organ mehrere Stellen (24 bis 29) zum Anordnen von Behältern in der genannten Richtung (D) mit Abstand voneinander aufweist und **dadurch**, dass das Organ nahe jeder Stelle mindestens ein Mittel (34 bis 39) zur Aussendung eines Signals zur Identifikation dieser Stelle per Funk umfasst, wobei diese Sendemittel (34 bis 39) in der genannten Richtung (D) mit Abstand voneinander angeordnet sind.
